## Europäisches Patentamt
## European Patent Office
## Office européen des brevets

(19)

(11) Numéro de publication: **0 212 318**
**B1**

(12)

# FASCICULE DE BREVET EUROPEEN

(45) Date de publication du fascicule du brevet:
31.01.90

(51) Int. Cl.⁴: **H01M 4/26, H01M 4/62**

(21) Numéro de dépôt: 86110192.1

(22) Date de dépôt: 24.07.86

(54) Procédé de fabrication d'une électrode au cadmium consolidée par polymère pour accumulateur alcalin et électrode obtenue par ce procédé.

(30) Priorité: 26.07.85 FR 8511463

(43) Date de publication de la demande:
04.03.87 Bulletin 87/10

(45) Mention de la délivrance du brevet:
31.01.90 Bulletin 90/5

(84) Etats contractants désignés:
AT BE CH DE FR GB IT LI LU NL SE

(56) Documents cités:
WO-A-84/00642
WO-A-84/02232
FR-A- 1 143 958
US-A- 2 738 375
US-A- 4 476 205

PATENTS ABSTRACTS OF JAPAN,
vol. 8, no. 226 (E-272)[1663], 17 octobre 1984; &
JP-A-59 108267 (MATSUSHITA DENKI SANGYO
K.K.) 22-06-1984
PATENTS ABSTRACTS OF JAPAN,
vol. 4, no. 117 (E-22)[599], 20 août 1980; &
JP-A-55 74 063 (SANYO DENKI K.K.) 04-06-1980
PATENTS ABSTRACTS OF JAPAN,
vol. 6, no. 182 (E-131)[1060], 18 septembre 1982; &
JP-A-57 96 471 (MATSUSHITA DENKI SANGYO
K.K.) 15-06-1982

(73) Titulaire: Société Anonyme dite SAFT, 156, avenue de
Metz, F-93230 Romainville(FR)

(72) Inventeur: Brezilion, Jean-Loup, 4 rue de la Gare
Parempuyre, F-33290 Blanquefort(FR)
Inventeur: Dauchier, Jean-Michel, 2 Allée des Graves,
F-33127 Martignas sur Jalle(FR)

(74) Mandataire: Weinmiller, Jürgen et al,
Lennéstrasse 9 Postfach 24, D-8133 Feldafing(DE)

## Description

La présente invention concerne une électrode au cadmium consolidée par polymère pour accumulateur alcalin.

Dans les batteries d'accumulateurs alcalins, les électrodes couramment utilisées sont des électrodes frittées à haute température. Dans certaines applications, et pour des raisons de coût de fabrication, sont apparues des électrodes au cadmium comprenant un support métallique sur lequel on fait adhérer une pâte active contenant la matière active proprement dite et un liant, par exemple le polytétrafluoréthylène. Ce liant a pour fonction de permettre la manipulation industrielle de la matière active, sans perte de cette dernière ; par ailleurs, il doit être parfaitement stable dans l'électrolyte.

Dans le brevet américain USP 4 476 205 on disperse dans l'eau un mélange d'oxyde de cadmium avec un liant de type copolymère carboxylé de styrène-butadiène, la proportion de ce dernier étant de 3,8% à 5% du mélange à l'état sec. On sèche de manière à obtenir une réticulation partielle du liant ; on broie le produit obtenu et on y incorpore sous forme de poudre du cadmium métal. On réalise l'électrode proprement dite en calandrant le mélange poudreux sur une grille ou un support en métal déployé.

Pour obtenir une tenue mécanique suffisante et pour accroître la cohésion de la poudre qui a été défavorisée par la réticulation partielle du liant, il est nécessaire d'appliquer une pression très importante sur le mélange poudreux. Ceci présente de graves inconvénients car il en résulte une porosité hétérogène et très faible de la masse active, de l'ordre de 30%, préjudiciable à la formation électrochimique de l'électrode, à la réactivité du cadmium, et de manière générale à son bon fonctionnement.

La présente invention a pour but de mettre en oeuvre un procédé où la pâte active contient un liant, mais qui permet d'aboutir à une électrode au cadmium de bonne qualité mécanique et électrochimique.

La présente invention a pour objet un procédé de fabrication d'une électrode au cadmium pour accumulateur alcalin, dont la masse active contient de l'oxyde de cadmium, du cadmium et un copolymère carboxylé de styrène-butadiène, caractérisé par le fait que l'on mélange dans de l'eau un agent gélifiant, de l'oxyde de cadmium et du cadmium sous forme pulvérulente constituant la matière active, un copolymère carboxylé de styrènebutadiène dans une proportion comprise entre 0,5% et 3% en poids de matière active, que l'on applique par enduction la pâte obtenue sur un collecteur de courant métallique, que l'on sèche, et que l'on soumet l'ensemble à une température comprise entre 120°C et 150°C pendant quelques minutes de manière à obtenir la réticulation dudit polymère.

La présente invention a également pour objet une électrode obtenue par le procédé précédent et présentant une porosité comprise en 50% et 70%.

S'il est nécessaire d'effectuer une opération ultérieure de calandrage, la porosité de l'électrode est alors comprise entre 45% et 65%.

D'autres caractéristiques et avantages de la présente invention apparaîtront au cours de la description suivante de modes de réalisation donnés à titre d'exemple illustratif mais non limitatif.

On mélange dans l'eau les éléments suivants :
- matière active CdO + Cd 92 % à 97 %
- additifs 3 % à 5 %
- produit gélifiant 0,3 % à 3 %
- copolymère carboxylé de styrène-butadiène : 0,5% à 3%

Les additifs peuvent être par exemple du borate de potassium ou de l'alcool polyvinylique, du nickel ou de l'hydroxyde de nickel.

Le produit gélifiant peut être le carboxyméthylcellulose, le méthocel, l'éthylméthylcellulose.

Cet ensemble est mélangé et malaxé par exemple dans un appareil de type pétrin planétaire.

La viscosité de la pâte obtenue est comprise entre $10^5$ et $25.10^5$ centipoises.

Le support de l'électrode est un feuillard lisse d'acier perforé nickelé, les trous ayant un diamètre compris entre 1,1 mm et 2 mm, le taux de perforation étant de 40% à 45%.

La masse active est déposée de part et d'autre par passage de ce support dans un bac contenant la pâte. Le dépôt obtenu est régularisé avec un dispositif à lèvres d'écartement contrôlé.

La bande ainsi réalisée subit un séchage complet et un traitement thermique à une température allant de 120°C à 150°C pendant une durée comprise entre une et cinq minutes. Ce traitement est suffisant pour assurer la réticulation du polymère.

On obtient une électrode dont la porosité est comprise entre 50% et 70%.

S'il est nécessaire d'opérer une phase ultérieure de calandrage, on obtient une électrode dont la porosité est comprise entre 45% et 65%, ce qui est très supérieur à la porosité obtenue avec le procédé antérieur.

Les électrodes selon l'invention sont caractérisées par une très bonne tenue mécanique : résistance aux chocs et à l'effritement. Elles présentent de ce fait un caractère non polluant ; l'oxyde métallique, finement divisé, qui constitue la matière active n'a pas tendance à se libérer lors de la manipulation des électrodes.

On constate un accroissement d'un facteur de l'ordre de trois de l'adhérence mesurée au cisaillement, par rapport aux pâtes actives ne contenant que du polytétrafluoréthylène.

Bien entendu l'invention n'est pas limitée aux modes de réalisation qui viennent d'être décrits. On pourra, sans sortir du cadre de l'invention remplacer tout moyen par un moyen équivalent.

## Revendications

1/ Procédé de fabrication d'une électrode au cadmium pour accumulateur alcalin, dont la masse active contient de l'oxyde de cadmium, du cadmium et un copolymère carboxylé de styrène-butadiène, caractérisé par le fait que l'on mélange dans de l'eau un agent gélifiant, l'oxyde de cadmium et le cadmium sous forme pulvérulente, le copolymère carboxylé de styrène-butadiène dans une proportion comprise entre 0,5% et 3% en poids de matière active, que l'on applique par enduction la pâte obtenue sur un collecteur de courant métallique, que l'on sèche, et que l'on soumet l'ensemble à une température comprise entre 120°C et 150°C pendant quelques minutes de manière à obtenir la réticulation dudit polymère.

2/ Procédé selon la revendication 1, caractérisé par le fait que l'agent gélifiant se trouve dans une proportion comprise entre 0,3% et 3% en poids.

3/ Procédé selon l'une des revendications 1 et 2, caractérisé par le fait que l'on effectue une opération supplémentaire de calandrage de ladite électrode.

4/ Electrode au cadmium obtenue par le procédé selon l'une des revendications 1 et 2 , caractérisée par le fait qu'elle présente une porosité comprise entre 50% et 70%.

5/ Electrode au cadmium obtenue par le procédé selon la revendication 3, caractérisée par le fait qu'elle présente une porosité comprise entre 45% et 65%.

6/ Electrode selon l'une des revendications 4 et 5, caractérisée par le fait que ledit collecteur de courant métallique est un feuillard lisse d'acier perforé nickelé, les trous ayant un diamètre compris entre 1,1 mm et 2 mm, et le taux de perforation étant compris entre 40% et 45%.

## Claims

1. A method of manufacturing a cadmium electrode for an alkaline storage battery, in which the active mass contains cadmium and cadmium oxide and a copolymer of carboxylated styrene-butadiene, characterized in that a gelling agent, cadmium and cadmium oxide in powder form are mixed in water with said carboxylated styrene-butadiene copolymer in a concentration of 0,5 to 3% by weight of active material, that the resulting paste is applied onto a metal current collector by coating, that the collector is dried, and that the resulting assembly is subjected to a temperature lying in the range 120°C to 150°C for a period of a few minutes in order to cause said polymer to cross-link.

2. A method according to claim 1, characterized in that the gelling agent rate is situated in the range 0,3% to 3% by weight.

3. A method according to one of claims 1 and 2, characterized in that an additional calendering operation is performed on said electrode.

4. A cadmium electrode obtained by the method according to one of claims 1 and 2, characterized in that the porosity of the electrodes lies in the range 50% to 70%.

5. A cadmium electrode obtained by the method according to claim 3, characterized in that the electrode has a porosity lying in the range 45% to 65%.

6. An electrode according to one of claims 4 and 5, characterized in that said metal current collector is a smooth sheet of perforated nickel-plated steel, with holes having a diameter lying in the range 1,1 mm to 2 mm and with the perforations rate lying in the range 40% to 45%.

## Patentansprüche

1. Verfahren zur Herstellung einer Kadmiumelektrode für einen alkalischen Akkumulator, deren aktive Masse Kadmiumoxid, Kadmium und ein karboxyliertes Styrol-Butadien-Copolymer enthält, dadurch gekennzeichnet, daß in Wasser ein Geliermittel, das Kadmiumoxid und das Kadmium in Pulverform sowie das karboxylierte Styrol-Butadien-Copolymer mit einem Anteil von 0,5 bis 3 Gew-% der aktiven Masse vermischt werden, daß die gewonnene Paste durch Beschichten auf einen metallischen Stromkollektor aufgebracht wird, daß dieser getrocknet wird, und daß das Ganze während einiger Minuten einer Temperatur zwischen 120°C und 150°C ausgesetzt wird, um die Vernetzung des Copolymers zu bewirken.

2. Verfahren nach Anspruch 1, dadurch gekennzeichnet, daß das Geliermittel einen Anteil von 0,3 bis 3 Gew-% aufweist.

3. Verfahren nach Anspruch 1 oder 2, dadurch gekennzeichnet, daß die Elektrode einer zusätzlichen Behandlung durch Kalandern unterzogen wird.

4. Kadmiumelektrode, die gemäß dem Verfahren nach einem der Ansprüche 1 oder 2 erhalten wurde, dadurch gekennzeichnet, daß sie eine Porosität zwischen 50 und 70% aufweist.

5. Kadmiumelektrode, die gemäß dem Verfahren nach Anspruch 3 erhalten wurde, dadurch gekennzeichnet, daß sie eine Porosität zwischen 45 und 65% aufweist.

6. Elektrode nach Anspruch 4 oder 5, dadurch gekennzeichnet, daß der metallische Stromkollektor eine vernickelte, perforierte, glatte Stahlfolie ist, wobei die Löcher einen Durchmesser zwischen 1,1 mm und 2 mm besitzen und der Lochanteil zwischen 40% und 45% liegt.